(19) Europäisches Patentamt
European Patent Office
Office européen des brevets

(11) EP 2 342 289 B1

(12) **EUROPEAN PATENT SPECIFICATION**

(45) Date of publication and mention of the grant of the patent:
**29.10.2014 Bulletin 2014/44**

(21) Application number: **09744700.7**

(22) Date of filing: **06.11.2009**

(51) Int Cl.:
***C09D 5/03*** *(2006.01)* ***C08K 5/13*** *(2006.01)*
***C08K 5/00*** *(2006.01)*

(86) International application number:
**PCT/EP2009/064732**

(87) International publication number:
**WO 2010/052295 (14.05.2010 Gazette 2010/19)**

(54) **TWO COMPONENT HEAT-CURABLE POWDER COATING COMPOSITION COMPRISING HYDROQUINONE**

PULVERFÖRMIGE WÄRMEHÄRTBARE ZWEIKOMPONENTEN-BESCHICHTUNG MIT HYDROCHINON

MATIÈRE D ENDUCTION EN POUDRE À DEUX COMPOSANTS ET POLYMÉRISABLE À CHAUD COMPRENANT HYDROQUINONE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.11.2008 US 112390 P**
**07.11.2008 US 112384 P**
**19.12.2008 EP 08172327**

(43) Date of publication of application:
**13.07.2011 Bulletin 2011/28**

(73) Proprietor: **DSM IP Assets B.V.**
**6411 TE Heerlen (NL)**

(72) Inventors:
- **JANSEN, Johan, Franz, Gradus, Antonius**
  **NL-6165 AP Geleen (NL)**
- **DRIJFHOUT, Jan, Pieter**
  **NL-8332 DC Steenwijk (NL)**

(74) Representative: **Kirk, Martin John**
**DSM Intellectual Property**
**P.O. Box 4**
**6100 AA Echt (NL)**

(56) References cited:
**EP-A1- 0 957 141** **EP-A1- 1 424 142**
**EP-A2- 0 942 050**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 342 289 B1

Printed by Jouve, 75001 PARIS (FR)

## Description

The invention relates to a two component heat-curable powder coating composition, a process for the preparation thereof, use of the powder coating composition to coat a substrate therewith, a substrate coated with the powder coating composition and a process for coating a substrate using the powder coating composition.

As shown by the article "Overview of the powder coatings market worldwide" by G. Maggiore in Pitture e Vernice Europe 1/92, pp. 15-22 and by the lecture by D. Richart "Powder Coating: Current Developments, Future Trends" (Waterborne, High-Solids and Powder Coatings Symposium, February 22-24, 1995), the search is still continuing for powder coating compositions which can be cured with little thermal stress of the substrate and which consequently are suitable for use on heat-sensitive substrates such as, for example, wood and plastic.

Therefore, there is a need for a powder coating composition that balances the ability to be cured at a low temperature of for example 60 to 130°C.

Furthermore, it is also important that these powder coating compositions are chemically storage stable. With 'chemically storage stable' is meant that a powder coating composition retains its curing characteristics, including flow, after storage, for example after storage at 20°C for 2 months. In order to obtain a chemically storage stable composition, a two component powder coating composition may be used.

Flow characteristics (flow) of the powder coating compositions on the substrate can be determined by comparing the flow of the coating with PCI Powder Coating Flow panels (ACT Test Panels Inc.) at a coating thickness of approximately 60 $\mu$m. The rating of flow is from 1 to 10, with 1 representing the roughest coating and 10 representing the coating with the best flow.

A two-component heat curable powder coating composition is known from EP 0 957 141 A1 which describes a low-temperature mixture of a powder (A) and a powder (B) in which at least the powder (A) includes an unsaturated polyester resin and a free radical initiator for initiating polymerization of unsaturated polyester resins in the powder coating composition and the powder (B) includes a polymerization promoter.

In order to further increase the storage stability of a two-component powder coating composition, an inhibitor may be added. In some examples of EP 0 957 141 A1, as an inhibitor tert-butyl catechol is used. A disadvantage of this two-component powder coating composition is that it does not provide for a coating having a good adhesion to metal and also the resulting coating is not very flexible.

It is the object of the invention therefore, to provide a two-component powder coating composition that provides coatings having a better adhesion to metal and showing a better flexibility.

This object is achieved by a heat-curable powder coating composition comprising a mixture of a powder (A) and a powder (B), wherein the powder (A) comprises a thermal radical initiator and wherein the powder (B) comprises a catalyst for the thermal radical initiator, wherein powder (A) does not comprise a catalyst for the thermal radical initiator and wherein powder (B) does not comprise a thermal radical initator, wherein a resin containing reactive unsaturations is present in powder (A) and/or powder (B), wherein a hydroquinone inhibitor is present in powder (A) and/or powder (B) wherein in case the reactive unsaturations in the resins are not able to react with each other after thermal radical initiation, a co-crosslinker, which co-crosslinker has the ability to react with the reactive unsaturations in the resin after radical initiation, is present in powder (A) and/or powder (B).

The powder coating composition of the invention comprising a hydroquinone inhibitor show a better adhesion (as demonstrated in the examples by a lower number in the Gitterschnitt test according to ISO 2409:2007) and a better flexibility (as demonstrated in the examples by a higher number in the Erichsen slow penetration test according to ISO1520:2006).

Co-pending application WO2010/052296 of the same applicant deals with a related invention.

With heat curable is meant within the framework of the current invention that curing of the powder coating composition can be effected by using heat. A thermal radical initiator and a catalyst for the thermal radical initiator is present in the composition of the present invention to make this heat curing possible. Heat curing has the advantage that in a one step process of heating a powder coating composition without the use of additional equipment, for instance equipment that generates UV light or accelerated electrons, the powder coating can be melted and cured onto a substrate, whereas with radiation curing of a powder coating composition on a substrate two steps are needed to melt and cure a powder coating on a substrate. In such a two step of radiation curing, first the powder coating composition is melted onto the substrate using heat, after which it is cured using UV or electron beam irradiation. Heat curing is especially desirable for coating 3D objects.

Preferably, the powder coating composition of the present invention is cured at a temperature of from 60 to 130°C. More preferably, the curing temperature is at least 65°C, even more preferably at least 70°C, for example at least 75°C, for example at least 80°C. More preferably, the curing temperature is at most 125°C, even more preferably at most 120°C, in particular at most 115°C, in particular at most 110°C, for example at most 105°C or for example at most 100°C. In special cases, for example for substrates that are more heat-sensitive, it may be of advantage to cure the powder coating composition at an even lower temperature, for example at a temperature lower than 100°C, lower

than 95°C, lower than 90°C or even lower than 85°C.

For the purpose of the invention with one acetone double rub (ADR) is meant one back and forward movement over the surface of a coating having a thickness of approximately 60 μm using a cotton cloth drenched in acetone, which cotton cloth covers a hammer head having a weight of 980 gram and a contact surface area with the coating of 2 $cm^2$. Every 20 rubs the cloth is drenched in acetone. The measurement is continued until the coating is removed (and the obtained ADR number is noted down) or until 100 ADR are reached.

With 'powder coating composition' is meant a composition that can be applied to a substrate as a dry (without solvent or other carrier) finely divided solid, which when melted and fused, forms a continuous film that adheres to the substrate.

With a 'one component system', also called a 1 K system, is meant that all (reactive) components of the powder coating composition form part of one powder. This as opposed to a two component system, as used herein, also called 2K system, wherein the powder coating composition is composed of at least two different powders with different chemical compositions, which keeps the reactive components physically separated. The at least two different powders may be mixed in a physical blend before the powder coating composition is put in the storage container or may be mixed just before applying the 2K system to a substrate to let a curing reaction take place. The compositions of the at least two different powders in the 2K system are usually selected such that each powder contains an ingredient which is needed for curing but is absent from the other powder(s). This separation allows preparation of the individual powder composition in a heated state (such as by melt mixing) without the initiation of the cure reaction.

The curing of the powder coating composition according to the invention takes place by means of heat; that is the powder coating composition is heat curable. The thermal radical initiator with the help of the catalyst for the thermal radical initiator upon heating generates (free) radicals able to initiate polymerization of the reactive unsaturations in the resin in combination with the unsaturated groups in the co-crosslinker or the polymerization of the reactive unsaturations in the resins.

The amounts of catalyst for the thermal radical initiator and the thermal radical initiator are calculated based on the amount of resin and co-crosslinker (the resin system) in the powder coating composition. In other words, for purpose of determining the amount of catalyst for the thermal radical initiator and the thermal radical initiator, the resin system is defined as the resin containing the reactive unsaturations plus the co-crosslinker, excluding the usual powder coating composition additives like pigments, fillers .

The thermal radical initiator may be any thermal radical initiator known to the person skilled in the art. Examples of thermal radical initiators include azo compounds such as for example azo isobutyronitrile (AIBN), 1,1'-azobis(cyclohexanenitrile), 1,1'-azobis(2,4,4-trimethylpentane), C-C labile compounds such as for example benzpinacole, peroxides and mixtures thereof.

The peroxide may for example be a percarbonate, a perester or a peranhydride. Suitable peranhydrides are for example benzoylperoxide (BPO) and lauroyl peroxide (commercially available as Laurox®). Suitable peresters are for instance t-butyl perbenzoate and 2-ethylhexyl perlaurate. Suitable percarbonates are for example di-t-butylpercarbonate and di-2-ethylhexylpercarbonate or monopercarbonates.

The choice of peroxide is in principle not critical and can be any peroxide known to the person skilled in the art for being suitable for use in radical curing of unsaturated resins. Such peroxides include organic and inorganic peroxides, whether solid or liquid (including peroxides on a carrier); also hydrogen peroxide may be applied. Examples of suitable peroxides include for example, peroxy carbonates (of the formula -OC(O)O-), peroxyesters (of the formula -C(O)OO-), diacylperoxides, also known as peranhydrides (of the formula -C(O)OOC(O)-), dialkylperoxides or perethers (of the formula -OO-), hydroperoxides (of the formula -OOH). The peroxides may also be oligomeric or polymeric in nature. An extensive series of examples of suitable peroxides can be found, for instance in US 2002/0091214-A1, paragraph [0018].

Preferably, the peroxide is chosen from the group of organic peroxides. Examples of suitable organic peroxides are: tertiary alkyl hydroperoxides (such as, for instance, t-butyl hydroperoxide), other hydroperoxides (such as, for instance, cumene hydroperoxide), special class of hydroperoxides formed by the group of ketone peroxides (perketones, being an addition product of hydrogen peroxide and a ketone, such as, for instance, methyl ethyl ketone peroxide, methyl isobutylketone peroxide and acetylacetone peroxide), peroxyesters or peracids (such as, for instance, t-butyl peresters, benzoyl peroxide, peracetates and perbenzoates, lauroyl peroxide, including (di)peroxyesters, -perethers (such as, for instance, peroxy diethyl ether). It is of course also possible to use mixtures of peroxides in the powder coating composition of the present invention. Also, the peroxides may be mixed peroxides, i.e. peroxides containing any two different peroxy-bearing moieties in one molecule.

It is clear to the person skilled in the art that also mixtures of thermal radical initiators may be used.

The choice of thermal radical initiator is in principle not critical. However, depending on the choice of the thermal radical initiator, the preferred temperature for curing may be tuned.

For instance when the curing should be achieved at temperatures of at least 150°C, benzpinacols for example benzopinacol; perethers, for example 2,5-dimethyl-2,5-di(t-butyl peroxy)hexane (Trigonox® 101), di-tert-butyl peroxide (Trigonox® B), di(tert-butylperoxyisopropyl)benzene (Perkadox 14), dicumylperoxide (Perkadox BC-FF), and hydroperoxides, for example tert-butyl hydroperoxide (Trigonox® A80 or Trigonox® AW70) or hydroperoxides, for example ketone peroxides, for example methylethylketone(hydro)peroxide (Butanox M50), acetylacetone(hydro)peroxide (Trigonox® 44B) may be used.

For curing in the temperature range of from 130 to 160°C peresters, for example tert-butyl peroxybenzoate (Trigonox® C), tert-butyl peroxyacetate (Trigonox® F-C50), tert-amyl peroxybenzoate (Trigonox® 127), tert-amyl peroxyacetate (Trigonox® 133-CK60), tert-butyl-2-ethylhexanoate (Trigonox® 21S), tert-butylperoxydiethylacetate (Trigonox® 27) or monopercarbonates, for example tert-butyl peroxy-2-ethylhexylcarbonate (Trigonox® 117), tert-butyl peroxyisopropylcarbonate (Trigonox® BPIC75), tert-amylperoxy-2-ethylhexylcarbonate (Trigonox® 131) or ketal peroxides, for example 1,1-di(tert-butylperoxy)3,3,5-trimethylcyclohexane (Trigonox® 29), di(tert-amylperoxy)cyclohexane (Trigonox® 122-C80) may be applied.

For curing in the temperature range of from 90 to 130°C peranhydrides for example dibenzoyl peroxide, dilauroylperoxide, didecanoylperoxide (Perkadox SE-10), di(3,5,5-trimethylhexanoyl)peroxide (Trigonox® 36-C75) or azocompounds for example 2,2'-azodi(isobutyronitrile) (AIBN), 2,2-azodi(2-methylbutyronitrile) or 1,1'-azodi(hexahydrobenzonitrile) or peresters, for example di-tert-butylperoxypivalate (Trigonox® 25-C75), tert-butyl peroxyneoheptanoate (Trigonox® 257-C75), cumylperoxyneodecanoate (Trigonox® 99-C75) may suitably be used.

It should be noted that Trigonox®, Butanox® and Perkadox® are trademarks of Akzo Nobel.

Preferably, the thermal radical initiator is a peroxide, more preferably a peroxide chosen from the group of peroxyesters, monoperoxycarbonates and mixtures thereof.

The catalyst for the thermal radical intiator may be chosen from the group of amines preferably tertiary amines or aromatic amines: diamines, polyamines, acetoacetamides, ammonium salts, transition metal catalysts or mixtures thereof, preferably the catalyst for the thermal radical initiator is a transition metal catalyst.

The transition metal catalyst may be chosen from the group of transition metal salts, transition metal complexes and mixtures thereof. Transition metals are elements with atomic numbers from/equal to 21 and up to/equal to 79. In chemistry and physics, the atomic number (also known as the proton number) is the number of protons found in the nucleus of an atom. It is traditionally represented by the symbol Z. The atomic number uniquely identifies a chemical element. In an atom of neutral charge, the atomic number is equal to the number of electrons. Examples of suitable transition metal catalysts are those salts and complexes of the following transition metals: V, Cr, Mn, Fe, Co, Ni, Cu, Zn, Mo, W, preferably Mn, Fe, Co or Cu. From an environmental perspective, it is most preferred to use Cu, Fe or Mn. Therefore, the invention also relates to a powder coating composition wherein the transition metal catalyst is chosen from the group of salts or complexes of Cu, Fe, Mn and mixtures thereof.

The salt or complex part of the transition metal catalysts is preferably organic, for example organic acid transition metal salts or derivatives thereof, for example transition metal carboxylates or transition metal acetoacetates, for example transition metal ethylhexanoate may be used. If a copper compound is used, it may for example be in the form of a $copper^{+}$ salt or a $copper^{2+}$ salt. If a manganese compound is used, it may for example be in the form of a $manganese^{2+}$ salt or a $manganese^{3+}$ salt. If a cobalt compound is used, it may for example be in the form of a $cobalt^{2+}$ salt.

The optimal amount of transition metal catalyst is dependent on the choice of transition metal catalyst and of the thermal radical initiator, but can easily be determined by the person skilled in the art through routine experimentation. Generally, the amount of transition metal catalyst may be chosen in the range of from 0.00001 to 25 mmol transition metal catalyst/kg resin system.

The amount of thermal radical initiator and the catalyst for the thermal radical initiator used is such that when the powder coating composition of the invention is applied to a substrate and cured at a temperature of 130°C for 20 minutes, the resulting coating resists at least 50, preferably at least 70 acetone double rubs. A method for measuring the acetone double rubs is described herein.

A hydroquinone inhibitor is present in powder (A) and/or powder (B). Examples of hydroquinone inhibitors (hydroquinones) include hydroquinone, 2-methylhydroquinone, 2-t-butylhydroquinone, 2,5-di-t-butylhydroquinone, 2,6-di-t-butylhydroquinone, 2,6-dimethylhydroquinone and 2,3,5-trimethylhydroquinone.

It is of course also possible to use a mixture of (the above mentioned) inhibitors or to use a hydroquinone inhibitor in combination with (mixtures of) (an)other inhibitor(s), such as for example phenolic compounds, stable radicals, catechols, phenothiazines,or benzoquinones.

The hydroquinone inhibitor is selected from the group of methylhydroquinones and t-butylhydroquinones.

Preferably a methylhydroquinone, more preferably 2-methylhydroquinone or a t-butylhydroquinone, more preferably 2-t-butylhydroquinone is used.

The hydroquinone inhibitor may be added to powder (A) and/or powder (B) after the synthesis of the resin. Alternatively, the hydroquinone inhibitor may be added before or during the synthesis of the resin.

Preferably, the hydroquinone inhibitor is present in at least powder (A).

The resin contains reactive unsaturations in which the reactive unsaturations are carbon carbon double bonds connected directly to an electron withdrawing group. With reactive unsaturations is meant that the carbon carbon double bonds connected directly to an electron withdrawing group are reactive towards radicals generated by a thermal radical

initiator. For the avoidance of doubt, reactive unsaturations do not include aromatic rings.

In the two-component powder coating composition, a resin containing reactive unsaturations is present in powder (A) and/or powder (B). It is of course also possible to use more than one resin in the two-component powder coating composition.

The WPU can for example be determined using $^1$H-NMR, for example as described in Journal of Applied Polymer Science, Vol. 23, 1979, pp 25-38, or by the method as described herein in the experimental section. In the method of the experimental section, the weight per unsaturation (WPU) was determined via $^1$H-NMR on a 300 MHz Varian NMR-spectrometer using pyrazine as internal standard. Alternatively, the WPU was determined theoretically by dividing the Mn by the amount of unsaturations as added during the synthesis of the resin and/or the co-crosslinker.

Examples of suitable resins include polyesters, polyacrylates (= acrylic resins), polyurethanes, epoxy resins, polyamides, polyesteramides, polycarbonates, polyureas, as well as mixtures thereof. Preferably the resin is a polyester.

The reactive unsaturations (the carbon carbon double bonds connected directly to an electron withdrawing group) may be present in the backbone of the resin, pendant on the (backbone of the) resin, at the terminus of the resin or at a combination of these locations. Preferably resins containing reactive unsaturations based on fumaric acid, maleic acid and/or itaconic acid, more preferably resins containing reactive unsaturations based on fumaric acid and/or maleic acid are used in the powder coating composition of the present invention.

Examples of how to introduce the reactive unsaturation in the resin are described below.

Polyesters are generally polycondensation products of polyalcohols and polycarboxylic acids.

Examples of polycarboxylic acids which may be used in the preparation of a polyester include isophthalic acid, terephthalic acid, hexahydroterephthalic acid, 2,6-naphthalenedicarboxylic acid and 4,4'-oxybisbenzoic acid, 3,6-dichlorophthalic acid, tetrachlorophthalic acid, tetrahydrophthalic acid, hexahydroterephthalic acid, hexachloroendomethylenetetrahydrophthalic acid, endomethylenetetrahydrophthalic acid, phthalic acid, azelaic acid, sebacic acid, decanedicarboxylic acid, adipic acid, succinic acid and trimellitic acid. These illustrative acids can be used in their acid form or where available, in the form of their anhydrides, acyl chlorides or lower alkyl esters. Mixtures of acids can also be used. In addition hydroxycarboxylic acids and lactones can be used. Examples include hydroxypivalic acid and ε-caprolactone.

Polyalcohols, in particular diols, can be reacted with the carboxylic acids or their analogues as described above to prepare the polyester. Examples of polyalcohols include aliphatic diols, for example, ethylene glycol, propane-1,2-diol, propane-1,3-diol, butane-1,2-diol, butane-1,4-diol, butane- 1,3-diol, 2,2-dimethylpropane-1,3-diol (neopentyl glycol), hexane-2,5-diol, hexane-1,6-diol, 2,2-bis- (4-hydroxycyclohexyl)-propane (hydrogenated bisphenol-A), 1,4-dimethylolcyclohexane, diethylene glycol, dipropylene glycol and 2,2-bis[4-(2-hydroxyethoxy)- phenyl]propane, the hydroxypivalic ester of neopentylglycol and 4,8-bis-(hydroxymethyl)tricyclo[5,2,1,0]decane (= tricyclodecane dimethylol) and 2,3-butenediol.

Trifunctional or more functional alcohols (together: polyols) or acids can be used to obtain branched polyesters. Examples of suitable polyols and polyacids are glycerol, hexanetriol, trimethylolethane, trimethylolpropane, pentaerythritol and trimellitic acid.

Monofunctional acids, for example para-tert-butyl benzoic acid, benzoic acid, meta-toluic acid, cinnamic acid, crotonic acid may be used to block the polymer chain.

Preferably, the resin in the powder coating composition of the present invention is a polyester prepared from at least the following monomers: terephthalic acid, neopentylglycol and/or propylene glycol. For branching trimethylolpropane may be present in the polyester.

The polyesters can be prepared via customary, generally known polymerization methods by esterification and/or transesterification or by esterification and/or transesterification via the use of an enzyme. For example, if needed, customary esterification catalysts such as, for example, butylchlorotindihydroxide, dibutyltin oxide, tetrabutyl titanate or butyl stannoic acid can be used. Examples of amounts of these esterification catalysts used are usually around 0.1 wt% based on the total weight of the polyester.

The conditions of preparation of the polyester and the COOH/OH ratio can be chosen such that end products are obtained which have an acid value or hydroxyl value which is within the intended range of values.

Preferably, the viscosity of the polyester resin is in the range of from 2 to 30 Pa.s as measured at 160°C using the method as described herein.

The resin can also be a polyacrylate, also known as acrylic resin. Generally, an acrylic resin is based on alkyl esters of (meth)acrylic acid optionally in combination with styrene. These alkyl esters of (meth)acrylic acid may be replaced by hydroxyl or glycidyl functional (meth)acrylic acids. Examples of alkyl esters of (meth)acrylic acid include, for example ethyl (meth)acrylate, isopropyl (meth)acrylate, n-butyl (meth)acrylate, n-propyl (meth)acrylate, isobutyl (meth)acrylate, ethylhexyl acrylate, cyclohexyl (meth)acrylate and mixtures thereof.

To obtain an acrylic resin having a hydroxyl functionality, the acrylic resin contains a hydroxyl functional (meth)acrylic acid, preferably in combination with alkyl esters of (meth)acrylic acid. Examples of hydroxyl functional (meth)acrylic acid esters include hydroxyethyl (meth)acrylate, and hydroxypropyl (meth)acrylate.

To obtain an acrylic resin having a glycidyl functionality, the acrylic resin contains a glycidyl functional

(meth)acrylic acid esters, preferably in combination with alkyl esters of (meth)acrylic acid. Examples of glycidyl functional (meth)acrylic acid esters include glycidyl methacrylate.

Clearly, it is also possible to synthesize acrylic resins with both hydroxyl and glycidyl functionality.

Polyurethanes can for example be prepared using customary, generally known polyaddition reaction of a (poly)isocyanate with a (poly)alcohol in the presence of, if needed a catalyst and other additives.

For example, if needed, customary catalysts such as, for example tertiary amines or organometallic compounds, such as for example monobutyltin tris(2-ethylhexanoate), tetrabutyl titanate or dibutyl tin dilaurate can be used. Examples of amounts of these catalysts used are usually around 0.01 wt% based on the total weight of the resin.

Examples of the (poly)alcohols that may be used in the preparation of polyurethanes are the same as those that can be used in the preparation of a polyester.

Examples of isocyanates that may be used in the preparation of polyurethanes include diisocyanates, for example toluene 2,4-diisocyanate, toluene 2,6-diisocyanate, 4,4'-diphenyl methane diisocyanate, 2,4'-diphenyl methane diisocyanate, 2,2'-diphenyl methane diisocyanate, hexamethylene diisocyanate, 5-isocyanato-1-(isocyanatomethy)-1,3,3-trimethylcyclohexane (isophorone diisocyanate), m-tetramethylxylene diisocyanate, dicyclohexylmethane 4,4'-diisocyanate, naphthalene 1,5-diisocyanate or 1,4-diisocyanatobenzene; and triisocyanates, for example triphenylmethane-4,4',4"-triisocyanate.

The resin may also be a polyepoxide, also known as epoxy resin. Epoxy resins may for example be prepared from phenolic compounds in combination with epichlorohydrins resulting in epoxy resins like for example a bisphenol A diglycidyl ether such as is commercially available as Epicote®1001 or a Novolac epoxide.

Polyamides can for example be prepared by a polycondensation reaction of a diamine and a dicarboxylic acid.

The dicarboxylic acids may be branched, non-linear or linear.

Examples of suitable dicarboxylic acids are for example phthalic acid, isophthalic acid, terephthalic acid, 1,4-cyclohexanedicarboxylic acid, naphthalene-2,6-dicarboxylic acid, cyclohexanediacetic acid, diphenyl-4,4'-dicarboxylic acid, phenylenedi (oxyacetic acid), sebacic acid, succinic acid, adipic acid, glutaric acid and/or azelaic acid.

Examples of suitable aliphatic diamines include for example isophorondiamine, 1,2-ethylenediamine, 1,3-propylenediamine, 1,6-hexamethylenediamine, 1,12-dodecylenediamine, 1,4 cyclohexanebismethylamine, piperazine, p-xylylenediamine and/or m-xylylenediamine. The polyamide may also be branched using branching components. Suitable examples of branching components include amines, for example di-alkylene-triamines, such as for example di-ethylene-triamine or di-hexamethylene-triamine; di-alkylene-tetramines or di-alkylene- pentamines; acids, for example 1,3,5-benzene tricarboxylic acid, trimellitic anhydride or pyromelitic anhydride; and poly-functional amino acids, such as for example aspartic acid or glutamic acid.

Polyester amides are resins containing both ester bonds (as in a polyester) and amide bonds (as in a polyamide) and may for example be prepared from mono-, di-, tri- or polyfunctional monomers, such as monomers with carboxylic acid functionality, monomers with hydroxyl functionality, monomers with amine functionality and/or monomers having a combination of any of these functionalities.

In principle any solid hydroxyl functional polycarbonate may be used. Hydroxyfunctional polycarbonates are commercially available from various sources.

Polyureas can for example be prepared using customary, generally known polyaddition reactions of a (poly)isocyanate with a (poly)amine in the presence of, if needed a catalyst and other additives similar to what is described above for polyurethanes. Suitable (poly)amines for the preparation of polyureas include those as are exemplified above for the polyamides. Suitable (poly)isocyanates for the preparation of polyureas include those as are exemplified above for the polyurethanes.

The reactive unsaturation may be built into the resin backbone, for instance by reacting a hydroxyl functional monomer (such as the polyalcohols mentioned before) with an unsaturated carboxylic acid or anhydride, such as for example fumaric acid, maleic acid, citraconic acid, itaconic acid or mesaconic acid. Resins where it is possible to build reactive unsaturation into the backbone by reacting a hydroxylfunctional monomer with an unsaturated carboxylic acid are for example polyesters.

Also, the reactive unsaturation may be connected to a side-group on the resin, by reacting an epoxide functional pendant group in the resin, for example a glycidyl functional acrylate, with an unsaturated carboxylic acid, such as for example methacrylic acid or acrylic acid or the monoesters of fumaric acid, maleic acid, citraconic acid, itaconic acid or mesaconic acid.

Also, the reactive unsaturation may be connected to a side-group on the resin, by reacting a hydroxyl functional pendant group in the resin, for example a hydroxyl functional acrylate, with an unsaturated carboxylic acid, such as for example methacrylic acid or acrylic acid or an unsaturated carboxylic anhydride, such as for example the anhydrides of itaconic acid, maleic acid or citraconic acid.

It is also possible to connect the reactive unsaturation to the terminus (or termini) of the resin, for example by reacting a hydroxyl functional, epoxide functional or amine functional terminal group with an unsaturated carboxylic acid, such as for example fumaric acid, maleic acid, citraconic acid, itaconic acid, mesaconic acid or the monoesters thereof,

methacrylic acid or acrylic acid. So, a resin having a hydroxyl, amine or glycidyl terminal group may be reacted with such carboxylic acids.

Also, or alternatively, hydroxyl or amine functional resins may be modified with hydroxyl functional compounds containing a reactive unsaturation via reaction with a diisocyanate forming urethane and/or urea bonds. This modification may be done both on pendant hydroxyl groups and on terminal hydroxyl groups.

The weight per unsaturation (WPU) of the resin as determined using $^1H$ NMR is usually less than 7500, preferably less than 1500, for example less than 1150 or less than 1100 or less than 1000 g/mole and/or preferably more than 100, more preferably more than 250 g/mole, for example more than 500 g/mole.

In case of an amorphous resin, the glass transition temperature (Tg) of the resin is preferably at least 20°C, more preferably at least 25°C. Preferably, the resin is a polyester having a Tg of at least 40, preferably at least 45°C and/or a Tg of at most 65°C, preferably at most 60°C, for example at most 55°C, for example at most 50°C.

The amount of acid groups in a resin is determined by the titration of the acid/anhydride groups by KOH. The amount of acid groups is expressed as the acid value (AV) in mg KOH/g resin.

The amount of hydroxyl groups in a resin is determined by the titration of the hydroxyl groups with acetic anhydride and the back titration with KOH. The amount of hydroxyl groups is expressed as the hydroxyl value (OH-value or OHV) in mg KOH used per g resin.

A resin is classified as acid functional in case the hydroxyl value is lower than the acid value. In case a carboxylic functional resin is desired, the hydroxyl value of the resin is usually below 10 mg KOH per g resin.

A resin is classified as hydroxyfunctional in case the acid value is lower than the hydroxyl value. In case a hydroxyl functional resin is desired, the acid value of the resin is usually below 10 mg KOH per g resin.

The hydroxyl value of the resin in the powder coating composition of the present invention is usually in the range of from 0 to 70 mg KOH per g resin.

It is desired to have a resin, preferably a polyester, with an acid value of less than 10, preferably less than 5 mg KOH per g resin in case a vinylether or vinylester co-crosslinker is used in the powder coating composition of the present invention. In case a co-crosslinker other than a vinylether or a vinylester is used, the acid value of the resin, preferably a polyester may range from 0 to 250, for example from 0 to 60 mg KOH per g of the resin.

The number average molecular weight (Mn) of the resin is in principle not critical and can for example be from 1,000 to 20,000 Da. Preferably, the Mn of the resin is at least 1,500 Da, for example at least 2,000 Da and/or preferably at most 8,000, for example at most 4,000 Da in case of an amorphous resin and/or preferably at most 15,000 Da in case of a crystalline resin. Preferably, the resin is a polyester having a number average molecular weight (Mn) in the range of from 1,500 to 8,000, for example in the range of from 2,100 and 4,000Da.

In case the reactive unsaturations in the resins are not able to react with each other after radical initiation, a co-crosslinker, which co-crosslinker has the ability to react with the reactive unsaturations in the resin after radical initiation, is present in powder (A) and/or powder (B). The co-crosslinker having the ability to react with the reactive unsaturations in the resin after radical initiation, is a compound having carbon carbon double or triple bonds.

Examples of suitable co-crosslinkers include those selected from the group of acrylates, methacrylates, vinylesters, vinylethers, vinyl amides, alkyn ethers, alkyn esters, alkyn amides, alkyn amines, propargyl ethers, propargyl esters, itaconates, enamines, allyls, thiols and mixtures thereof.

Preferably, the co-crosslinker is selected from the group of allyls, acrylates, methacrylates, vinylesters, vinylethers, vinyl amides, alkyn ethers, alkyn esters, alkyn amides, alkyn amines, propargyl ethers, propargyl esters, itaconates, enamines, thiols and mixtures thereof. More preferably, the co-crosslinker is chosen from the group of vinylethers, vinylesters and mixtures thereof.

An acrylate is a monomer, oligomer or polymer having an acrylate moiety (see formula (1) in Table 1). A methacrylate is a monomer, oligomer or polymer having a methacrylate moiety (see formula (2) in Table 1). Examples of liquid (meth)acrylates include butanediol dimethacrylate hexanedioldiacrylate and hydroxypropylmethacrylate. Examples of other (meth)acrylates are as given herein (see for example the part on a resin modified with (meth)acrylate). Since resins containing unsaturations based on (meth)acrylic acid can homopolymerize, a resin based on (meth)acrylic acid may be used in combination with an oligomer or polymer containing (meth)acrylic acid based unsaturations as a co-crosslinker.

A vinylester is a monomer, oligomer or polymer having a vinylester moiety (see formula (3) in Table 1). Examples of vinylesters include mono functional vinylesters, for example stearic acid vinylester, palmitic acid vinylester, benzoic acid vinylester, lauric acid vinylester, hexanoic acid vinylester, pivalic acid vinylester, oleic acid vinylester, methacrylic acid vinylester, decanoic acid vinylester, bromo acetic acid vinylester, myristic acid vinylester, valeric acid vinylester, nonanoic acid vinylester, heptanoic acid vinylester, phenyl acetic acid vinylester, maleic acid (di)vinylester, undecanoic acid vinylester, iodo acetic acid vinylester, 2-naphthoic acid vinylester, 3-chloro-butyric acid vinylester, 4-chloro-butyric vinylester and 2-chloro-butyric acid vinylester; di functional vinylesters, such as for example adipic acid divinylester, fumaric acid divinylester, sebacic acid divinylester, phthalic acid divinylester and terephthalic acid divinylester; and polyfunctional vinylesters, for example trimellitic acid trivinylester.

A vinylether is a monomer, oligomer or polymer having a vinylether moiety (see formula (4) in Table 1). The co-crosslinker in the powder coating composition of the present invention is for example a vinylether. Examples of liquid vinylethers include mono (alcohol) functionalized vinylethers, for example ethyl vinylether, 4-hydroxybutyl vinylether, 2-hydroxyethyl vinylether, diethylene glycol monovinyl ether or 4-(hydroxy methyl) cyclohexyl methyl vinyl ether (1,4-cyclohexanedimethanol vinyl ether); di alcohol functionalized vinylethers, such as for example butanediol divinylether, diethyleneglycol divinylether, triethyleneglycol divinylether, tetraethyleneglycol divinylether, poly-THF® 290-divinylether, hexanediol divinylether, 1,4-cyclohexanedimethanol divinylether; tri alcohol functionalized vinylethers, for example trimethylol propane trivinylether, 1,2,4-trivinylcyclohexane; and mono amino functional vinylethers, for example 3-amino propyl vinyl ether.

For example, a vinylether may be prepared from a dimethylester and a hydroxyfunctional vinylether under formation of a vinyletherester.

Examples of amorphous or semi-crystalline vinyl ethers include vinylether urethanes, vinylether polyester urethanes, vinylether ureas and vinylether polyester ureas. The polyester part of a vinylether polyester urethane is generally a polycondensation product of polyalcohols and polycarboxylic acids and may have the same monomers and may be synthesized analogous to the synthesis of polyesters as described above. The polyester part of vinylether polyester urethane may be saturated or unsaturated and may be similar to the resin.

In order to prepare a vinylether urethane, isocyanate may be reacted with a hydroxyfunctional vinylether and/or a polyalcohol. To prepare a vinylether polyester urethane, an isocyanate may be reacted with a hydroxyfunctional vinylether and a hydroxyfunctional polyester (for example a polyester as described above). These reactions are customary, generally known polyaddition reaction of a (poly)isocyanate with a (poly)alcohol in the presence of, if needed, a catalyst and other additives. Some examples of catalysts, other additives, polyalcohols and isocyanates are given herein (see for example the part on polyurethanes).

Examples of vinylethers also include vinyletherpolyesters, which for example can be prepared from acid functional polyesters (for example as exemplified herein) with hydroxyfunctional vinylethers (for example as exemplified herein). Ofcourse, it is also possible to prepare vinyletherpolyesters via transesterification of hydroxyfunctional or alkylfunctional polyesters with hydroxyfunctional vinylethers.

A vinylamide is a monomer, oligomer or polymer having a vinylamide moiety (see formula (5) in Table 1). An alkyn ether is a monomer, oligomer or polymer having an alkyn ether moiety (see formula (6) in Table 1). An alkyn ester is a monomer, oligomer or polymer having an alkyn ester moiety (see formula (7) in Table 1). An alkyn amide is a monomer, oligomer or polymer having an alkyn amide moiety (see formula (8) in Table 1). An alkyn amine is a monomer, oligomer or polymer having an alkyn amine moiety (see formula (9) in Table 1). A propargyl ethers is a monomer, oligomer or polymer having a propargyl ethers moiety (see formula (10) in Table 1). A propargyl ester is a monomer, oligomer or polymer having a propargyl ester moiety (see formula (11) in Table 1).

An itaconate is a monomer, oligomer or polymer having an itaconate moiety (see formula (12) in Table 1). Examples of liquid itaconates include diethylitaconate, dibutylitaconate. Examples of solid itaconates include dimethylitaconate. Examples of amorphous itaconates are as given above (see for example the part on a resin modified with monoesters of itaconic acid or itaconic acid). Since resins containing unsaturations based on itaconic acid can homopolymerize, a resin containing itaconic acid based unsaturations may be used in combination with an oligomer or polymer containing itaconic acid based unsaturations as a co-crosslinker.

An enamine is a monomer, oligomer or polymer having an enamine moiety (see formula (13) in Table 1).

As defined herein, a monomer has an Mn below 500Da, an oligomer has an Mn below 1,500Da and a polymer has an Mn of at least 1,500Da.

<u>Table 1.</u> The co-crosslinker for use in the composition of the present invention, is chosen from the group of monomers, oligomers or polymers comprising one or more of the following moieties: (meth)acrylate, vinylester, vinylether, vinyl amide, alkyn ether, alkyn ester, alkyn amide, alkyn aminepropargyl ester, propargyl ether, itaconate and/or enamine moieties. The points of attachment of the moieties are indicated with

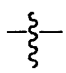 .

| Structure formula | name |
|---|---|
| 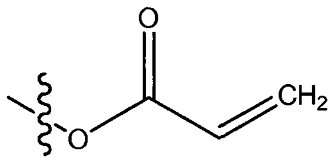 (1) | acrylates |
| 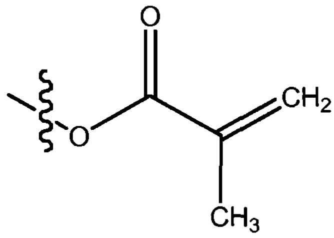 (2) | methacrylate |
| 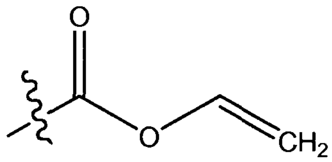 (3) | vinylester |
| 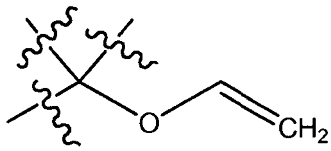 (4) | vinylether |
| 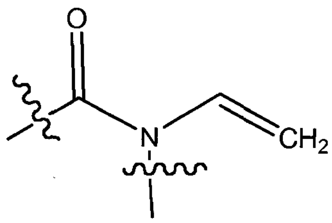 (5) | vinyl amide |
| 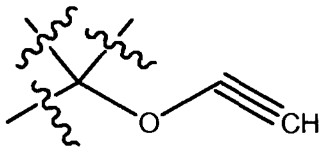 (6) | alkyn ether |
| 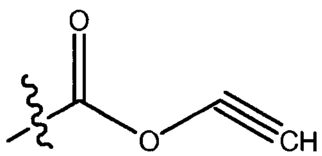 (7) | alkyn ester |
| 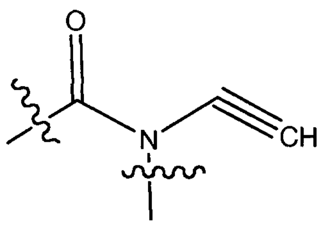 (8) | alkyn amide |

(continued)

| Structure formula | name |
|---|---|
| 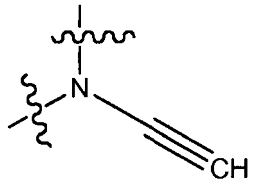 (9) | Alkyn amine |
| 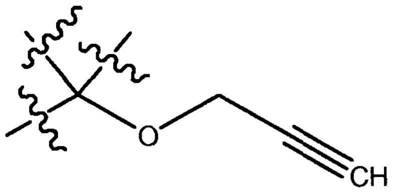 (10) | propargyl ether |
| 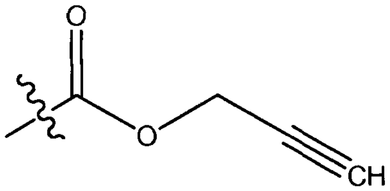 (11) | propargyl ester |
| 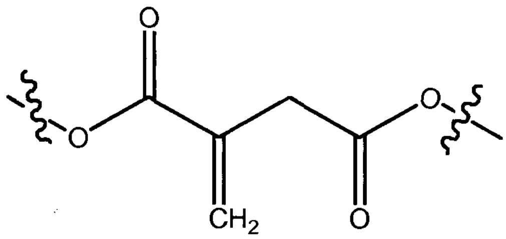 (12) | itaconate |
| 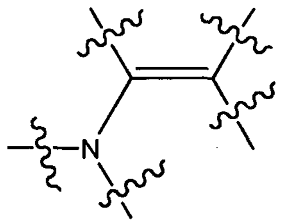 (13) | enamine |

In case the carbon carbon double bonds directly connected to an electron withdrawing group in the resin are capable of reacting with the resin itself (i.e. the resin is homopolymerizable) as may be the case for some resins containing acrylate, methacrylate or itaconate moieties, the resin and the co-crosslinker may contain the same moieties, and in a special embodiment, the presence of a separate co-crosslinker is therefore optional and the resin and the co-crosslinker may be the same.

In case the resin is incapable of homopolymerization, a separate co-crosslinker needs to be present to obtain curing. For the avoidance of doubt, within the framework of the invention, a resin can homopolymerize if the reactive unsaturations in the resins are able to react with each other after radical initiation by the thermal radical initiator.

The separate co-crosslinker may be (semi-)crystalline or amorphous. Also, a liquid co-crosslinker may be used. Preferably, the co-crosslinker is non-volatile at the temperatures and pressures used when processing, applying and storing the powder coating composition.

The weight per unsaturation of the co-crosslinker as determined using $^{1}H$ NMR is preferably lower than 870 g/mole, for example lower than 680 g/mole, for example lower than 650 g/mole, for example lower than 630 g/mole and/or preferably higher than 70, more preferably higher than 100, for example higher than 150 g/mole. The Mn of the co-crosslinker is not critical and may vary between wide ranges, for example the Mn may be between 100 and 20,000 Da.

The amount of co-crosslinker used in the powder coating composition is in principle not critical, especially if a homopolymerizable resin is used. In case the resin is not capable of homopolymerization, for example, the molar ratio of the unsaturations in the co-crosslinker and the unsaturations in the resin may be between 9:1 and 1:9, preferably between 2:1 and 1:2. Preferably, in this case, about equimolar amounts of unsaturations in the co-crosslinker and resin are used.

In one embodiment of the invention, the resin containing the reactive unsaturations and the optional co-crosslinker are present in both powder (A) and in powder (B).

In another embodiment of the invention, the hydroquinone inhibitor is present in both powder (A) and in powder (B).

In yet another embodiment of the invention, the resin containing the reactive unsaturations, the optional co-crosslinker and the hydroquinone inhibitor are present in both powder (A) and in powder (B).

The preparation of powder coating compositions is described by Misev in "Powder Coatings, Chemistry and Technology" (pp. 224-300; 1991, John Wiley).

A common way to prepare a powder is to mix the separately weighed-out components in a premixer, heat the obtained premix, for example in a kneader, preferably in an extruder to obtain an extrudate, cool down the obtained extrudate until it solidifies and crush it into granules or flakes that are further grinded to reduce the particle size followed by appropriate classification to obtain a powder of the right particle size.

To obtain a two-component powder coating composition, at least two powders are physically mixed.

The invention also relates to a process for the preparation of a two component powder coating composition according to the invention comprising the steps of:

(a) forming the powder (A) using a method as known per se
(b) forming the powder (B) using a method as known per se
(c) physically mixing powder (A) and powder (B) to form the two component powder coating composition.

In another aspect, the invention relates to a process for coating a substrate comprising the following steps:

1) applying a powder coating composition according to the invention to a substrate such that the substrate is partially or fully coated with a coating.
2) heating the obtained partially or fully coated substrate for such time and to such temperature such that the coating is at least partially cured.

The powder coating composition of the present invention may be applied using the techniques known to the person skilled in the art, for example using electrostatic spray or electrostatic fluidized bed.

Heating of the coated substrate may be done using conventional methods, such as with a convection oven and/or with an (N)IR lamp. Even microwave equipment may be used to heat the substrate.

The time during which the coating is at least partially cured is preferably below 60 minutes and usually above 1 minute in case a convection oven is used to heat the coating. More preferably, the curing time is below 40 minutes in case a convection oven is used to heat the coating.

The temperature at which the coating is cured is preferably below 130°C and usually above 60°C. Preferably, the curing temperature is lower than 120°C, more preferably lower than 110°C, most preferably lower than 100°C, most preferably lower than 95°C. Preferably, the curing temperature is at least 65°C, more preferably 70°C, even more preferably at least 75°C.

The powder coating composition of the present invention may optionally contain the usual additives, such as for example fillers/pigments, degassing agents, flow agents, or (light) stabilizers. It should be noted that none of these usual additives are considered to be transition metal compounds. Examples of flow agents include Byk® 361 N. Examples of suitable fillers/pigments include metal oxides, silicates, carbonates or sulphates. Examples of suitable stabilizers include UV stabilizers, such as for example phosphonites, thioethers or HALS (hindered amine light stabilizers). Examples of degassing agents include benzoin and cyclohexane dimethanol bisbenzoate. Other additives, such as additives for improving tribo-chargeability may also be added.

In another aspect, the invention relates to a substrate that is fully or partially coated with a powder coating based on the heat-curable powder coating composition according to the present invention.

In one embodiment of the invention the substrate is a non heat-sensitive substrate, for example glass, ceramic, fibre cement board, or metal, for example aluminum, copper or steel. In another embodiment of the invention, the substrate is a heat-sensitive substrate. Therefore, the invention also relates to use of a powder coating composition of the invention to coat a heat-sensitive substrate, preferably wood.

Heat-sensitive substrates include plastic substrates, wood substrates, for example solid wood, such as for example: hard wood, soft wood, plywood; veneer, particle board, low density fibre board, medium density fibreboard

and high density fibreboard, OSB (Oriented Strand Board) wood laminates, chipboard and other substrate in which wood is a important constituent, such as for example foil covered wooden substrates, engineered wood, plastic modified wood, plastic substrates or wood plastic compounds (WPC); substrates with cellulosic fibres, for example cardboard or paper substrates; textile and leather substrates.

Other heat-sensitive substrates include objects that are a combination of a metal substrate with a heat-sensitive part, such as plastic hosing, heavy metal parts, strips, for example aluminium frames with heat strips.

Examples of plastic substrates include unsaturated polyester based compositions, ABS (acrylonitril butadiene styrene), melamine-formaldehyde resins, polycarbonate, polyethylene, polypropylene, ethylene-propylene-diene monomer (EPDM), thermoplastic olefin (TPO), polyurethane (PU), polypropylene oxide (PPO), polyethylene oxide (PEO), polyethyleneterephthalate and nylon, for example polyamide 6,6 and combinations thereof, for example polycarbonate-ABS.

Other substrates that are particularly suitable for coating with the powder coating of the invention are those where a low temperature cure is desired for efficient production, such as heavy metal parts.

In another aspect, the invention relates to the use of a composition according to the invention to fully or partially coat a substrate.

Also, the invention relates to the use of a powder coating composition according to the invention as a stain, primer or topcoat layer.

Specific wood coating markets where the powder coating composition of the invention may be used include domestic furniture, such as tables, chairs, cabinets, bedroom and bathroom furniture, office furniture, contract furniture such as school and child furniture, hospital furniture, restaurant and hotel furniture, kitchen cabinets and furniture, (flat) panels for interior design, interior and exterior windows and doors, interior and exterior window frames and door frames, exterior and interior sidings and wooden flooring.

Specific plastic coating markets where the powder coating composition of the invention may be used include automotive applications, such as interior car parts, wheel covers, bumpers, under the hood parts, flexible flooring, sporting goods, cosmetics, audio-visual applications, such as TV sets, computer housing, phones, household appliances and satellite dishes.

## EXAMPLES

The invention is explained in more detail with reference to the following examples.

### Experimental section

### Synthesis and application of the powder coating

Table 2: Chemicals

| Chemical name | Commercial name | Description or use |
|---|---|---|
| Neopentyl glycol | | Monomer |
| Trimethylol propane | | Monomer |
| Terephthalic acid | | Monomer |
| Fumaric acid | | Monomer |
| Ethylene carbonate | | Monomer |
| Tert-butyl peroxybenzoate | Trigonox® C from Akzo Nobel | Initiator |
| Tert-butyl hydroquinone | | Inhibitor |
| Tert-butyl catechol | | Inhibitor |
| Cobalt bis(2-ethylhexanoate), also known as Cobalt octanoate | COMMET® Cobalt Octanoate from De Monchy International B.V. | Accelerator |
| Bis-(4-vinyl oxy butyl) hexamethylenediurethane | URACROSS® P3307 from DSM | Co-crosslinker |
| | Byk® 361-N from Byk | Flow agent |

Syntheses of resins : General procedure

The chemicals used in the following examples are described in table 2.

Resin synthesis (resin A)

A reaction vessel fitted with a thermometer, a stirrer and a distillation device, was filled with a tin catalyst and the monomers for the first step (all the (poly)alcohols and terephthalic acid) as listed in table 3. Stirring was then applied and a light nitrogen flow was passed over the reaction mixture while the temperature was raised to 220°C. Subsequently, for the second step fumaric acid together with a small amount of radical inhibitor was added at a temperature of 180°C followed by esterification at 220°C. When an acid value of less than approximately 15 mg KOH/g resin was reached, the reaction mixture was cooled to 205°C. The third stage of the polyester preparation was carried out under reduced pressure till an acid value of approximately 5 mg KOH/g resin was reached. The acid value of the resin was brought below 5 mg KOH/g resin via reaction of the remaining acid-groups of the resin with an alkylene carbonate group (see table 3 which chemical is used). The used amount was dependent on the acid value before addition.

Resin analysis:

Glass transition temperature (Tg) measurements (inflection point) and melting temperature measurements were carried out via differential scanning calorimetry (DSC) on a Mettler Toledo, TA DSC821, in $N_2$ atmosphere and at a heating rate of 5°C/min. Viscosity measurements were carried out at 160°C, on a Rheometric Scientific CT 5 (Rm 265) apparatus (Mettler Toledo). A 30 mm spindle was used. The applied shear-rate was $70s^{-1}$. The acid and hydroxyl values of the resins were determined titrimetrically according to ISO 2114-2000 and ISO 4629-1978, respectively.

The weight per unsaturation (WPU) was determined via $^1$H-NMR on a 300 MHz Varian NMR-spectrometer using pyrazine as internal standard. Recorded spectra were analyzed in full with ACD software and peak areas of all peaks were calculated.

The weight resin per mole unsaturation was calculated with the following formula:

$$WPU = \left[ \frac{W_{pyr}}{W_{resin}} \frac{1}{MW_{pyr}} \frac{A_{c=c} / N_{c=c}}{A_{pyr} / N_{pyr}} \right]^{-1}$$

$W_{pyr}$ and $W_{resin}$ are weights pyrazine (is internal standard) and resin, respectively, expressed in the same units. $MW_{pyr}$ is molecular weight pyrazine (= 80 gr/mole). $A_{C=C}$ is the peak area for hydrogens attached to the carbon carbon double bonds (C=C component) of the reactive unsaturations in the resin; $N_{C=C}$ is the number of hydrogens of that particular C=C component. $A_{pyr}$ is the peak area for pyrazine and $N_{pyr}$ is the number of hydrogens (= 4).

Table 3: Synthesis and properties of the resin used

| Resin no. | A |
|---|---|
| Monomers | Amount (mole %) |
| Neopentylglycol | 47.9 |
| Trimethylol propane | 3.7 |
| Terephtalic acid | 37.5 |
| Fumaric acid | 10.9 |
| Ethylene carbonate | X |
| | |
| Resin characterization | |
| Weight per unsaturation (WPU) (theoretical) | 1028 |
| Weight per unsaturation (WPU) (measured with NMR) | 1130 |
| Mn (theoretical) | 2723 |
| Hydroxyl value (mg KOH/g) | 42.7 |

(continued)

| Resin no. | A |
|---|---|
| Monomers | Amount (mole %) |
| Acid value (mg KOH/g) | 3.1 |
| Tg (°C) | 46.5 |
| Viscosity at 160°C (Pa.s) | 21.2 |

Preparation of the powder coating composition, application and analysis:

The compositions of the tested powder coating composition are given in the tables below. The components were extruded at 60°C using a Prism Twin Screw extruder (200 rpm, torque > 90%). The extrudate was grinded and sieved; the sieving fractions smaller than 90 microns (1 micron= 1 μm= $1x10^{-6}$ m) were used as a powder coating composition. Both powders x.1 and x.2 were dry blended in a 1:1 ratio. The dry blended powder coating compositions were applied with a corona powder application spray gun on an aluminum ALQ panel and cured at various temperatures for 10 minutes in a convection oven (Heraeus UT 6120). The applied coating layer thickness was approximately 60 μm.

Acetone double rubs

Acetone double rubs (ADR) were carried out as described herein to determine the curing.

Gitterschnitt

The adhesion of the powder coating to the substrate was measured using the Gitterschnitt test according to ISO 2409:2007.

Erichsen slow penetration test

The flexibility of the powder coating was measured using the Erichsen Slow Penetration test according to ISO 1520:2006.

Preparation of the powder coating composition

The ratio resin : co-crosslinker is chosen 1:1 on mole unsaturation. The amount of initiator in the initiation system is based on the total weight of the resin system. (e.g. x mole initiator per kg resin system). The amount of inhibitor in the initiation system is based on the total weight of the resin system. The amount of accelerator in the initiation system is based on the total weight of the resin system (e.g. x mole accelerator per kg resin system). The amount of flow agent is calculated in wt% of the total powder coating composition.

Example 1 and comparative experiments A-

2 component powder coatings were prepared employing the compositions described below. The powders x.1 and x.2 were mixed as dry blend and applied as powder.

Table 4

| | Powder 1.1 | Powder 1.2 | Powder A.1 | Powder A.2 |
|---|---|---|---|---|
| Resin | A | A | A | A |
| Co-crosslinker | Uracross® P 3307 | Uracross® P 3307 | Uracross® P 3307 | Uracross® P 3307 |
| Inhibitor | Tert-butyl hydroquinone 500 ppm | Tert-butyl hydroquinone 500 ppm | Tert-butyl catechol 500 ppm | Tert-butyl catechol 500 ppm |
| Initiator | Trigonox® C 155 mmol/kg | | Trigonox® C 155 mmol/kg | |

(continued)

| | Powder 1.1 | Powder 1.2 | Powder A.1 | Powder A.2 |
|---|---|---|---|---|
| Accelerator Cobalt ethylhexanoate (10%Co) | | 6 mmol/kg | | 6 mmol/kg |
| Flow agent Byk® 361-N | 0.5 wt% | 0.5 wt% | 0.5 wt% | 0.5 wt% |
| Temp for 100 ADR of the cured powder coating | 100 | | 100 | |
| Gitterschnitt EN ISO 2409 0 = very good, 4 = bad | 0 | | 4 | |
| Erichsen slow penetration (mm) | 3.8 | | 2.1 | |

These examples demonstrate that the compositions of the invention comprising a hydroquinone inhibitor show a better adhesion (as demonstrated by a lower number in the Gitterschnitt test) and a better flexibility (as demonstrated by a higher number in the Erichsen slow penetration test).

Example 2 and comparative experiments B

2 component powder coatings were prepared employing the compositions described below. The powders x.1 and x.2 were mixed as dry blend and applied as powder.

Table 5

| | 2.1 | 2.2 | B.1 | 8.2 |
|---|---|---|---|---|
| Resin | A | A | A | A |
| Co-crosslinker | Uracross® P 3307 | Uracross® P 3307 | Uracros® P 3307 | Uracross® P 3307 |
| Inhibitor | Tert-butyl hydroquinone 500 ppm | Tert-butyl hydroquinone 500 ppm | Tert-butyl hydroquinone 500 ppm | Tert-butyl hydroquinone 500 ppm |
| Initiator | Trigonox® C 155 mmol/kg | | Trigonox® C 155 mmol/kg | |
| Accelerator Cobalt ethylhexanoate (10%Co) | | | | 6 mmol/kg |
| Accelerator Copper naphtenate (8%Cu) | | 6 mmol/kg | | |
| Flow agent Byk® 361-N | 0.5 wt% | 0.5 wt% | 0.5 wt% | 0.5 wt% |
| | | | | |
| ADR reached at 80°C | 40 | | 20 | |
| ADR reached at 90°C | 95 | | 30 | |

As can be seen from the above table, the composition of the invention comprising a salt or complex of Cu as a catalyst for the radical initiator provides a powder coating having a better cure at low temperatures (as can be seen from the amount of ADRs reached) than a composition comprising a Co-catalyst as a catalyst for the radical initiator.

From an environmental perspective, it is desired to use a salt or complex of Cu, Fe or Mn, rather than a salt or complex of Co.

## Claims

1. Heat-curable powder coating composition comprising a mixture of a powder (A) and a powder (B), wherein the powder (A) comprises

    - a thermal radical initiator

    wherein the powder (B) comprises

    - a catalyst for the thermal radical initiator

    wherein powder (A) does not comprise a catalyst for the thermal radical initiator and wherein powder (B) does not comprise a thermal radical initiator wherein a resin containing reactive unsaturations is present in powder (A) and/or powder (B)
    wherein a hydroquinone inhibitor is present in powder (A) and/or powder (B) wherein in case the reactive unsaturations in the resin are not able to react with each other after thermal radical initiation, a co-crosslinker, which co-crosslinker has the ability to react with the reactive unsaturations in the resin after radical initiation, is present in powder (A) and/or powder (B).

2. Composition according to claim 1, wherein the hydroquinone inhibitor is selected from the group of methylhydroquinones and t-butylhydroquinones.

3. Composition according to claim 1 or claim 2, wherein the catalyst for the thermal radical initiator is a transition metal catalyst.

4. Composition according to claim 3, wherein the transition metal catalyst is chosen from the group of salt or complexes of Cu, Mn, Fe and mixtures thereof.

5. Composition according to any one of claims 1-4, wherein the thermal radical initiator is a peroxide chosen from the group of peroxyesters, monoperoxycarbonates and mixtures thereof.

6. Composition according to any one of claims 1-5, wherein the resin contains reactive unsaturations based on maleic acid and/or on fumaric acid.

7. Composition according to any one of claims 1-6, wherein the resin is polyester.

8. Composition according to any one of claims 1-7, wherein the co-crosslinker is selected from the group of allyls, acrylates, methacrylates, vinylesters, vinylethers, vinyl amides, alkyn ethers, alkyn esters, alkyn amides, alkyn amines, propargyl ethers, propargyl esters, itaconates, enamines, thiols and mixtures thereof.

9. Composition according to any one of claims 1-8, wherein the co-crosslinker is chosen from the group of vinylethers, vinylesters and mixtures thereof.

10. Composition according to any one of claims 1-9, wherein the resin containing the reactive unsaturations and the optional co-crosslinker are present in both powder (A) and in powder (B).

11. Composition according to any one of claims 1-10, wherein the hydroquinone inhibitor is present in both powder (A) and in powder (B).

12. Process for the preparation of a two component powder coating composition according to any one of claims 1-11 comprising the steps of:

(a) forming the powder (A)
(b) forming the powder (B)
(c) physically mixing powder (A) and powder (B) to form the two component powder coating composition.

**13.** Process for coating a substrate comprising the following steps:

1) applying a powder coating composition according to any one of claims 1-11 to a substrate to obtain a coated substrate
2) heating the coated substrate.

**14.** Substrate that is fully or partially coated with a powder coating composition according to any one of claims 1-11.

**15.** Use of a powder coating composition of any one of claims 1-11 to coat a heat-sensitive substrate.

**16.** Use of powder coating composition according to claim 15 wherein the heat-sensitive substrate is wood.

## Patentansprüche

**1.** Wärmehärtbare Pulverbeschichtungszusammensetzung, umfassend ein Gemisch eines Pulvers (A) und eines Pulvers (B),
wobei das Pulver (A)

- einen thermischen Radikalinitiator umfasst, wobei das Pulver (B)
- einen Katalysator für den thermischen Radikalinitiator umfasst,

wobei Pulver (A) keinen Katalysator für den thermischen Radikalinitiator umfasst und wobei Pulver (B) keinen thermischen Radikalinitiator umfasst,
wobei in Pulver (A) und/oder Pulver (B) ein Harz vorhanden ist, das reaktionsfähige Nichtsättigungen enthält,
wobei in Pulver (A) und/oder Pulver (B) ein Hydrochinon-Hemmer vorhanden ist,
wobei in dem Fall, dass die reaktionsfähigen Nichtsättigungen in dem Harz nach einer thermischen Radikalinitiation nicht zur Reaktion miteinander fähig sind, ein Co-Vernetzer in Pulver (A) und/oder Pulver (B) vorhanden ist, welcher Co-Vernetzer die Fähigkeit aufweist, nach Radikalinitiation mit den reaktionsfähigen Nichtsättigungen in dem Harz zu regieren.

**2.** Zusammensetzung gemäß Anspruch 1, wobei der Hydrochinon-Hemmer ausgewählt ist aus der Gruppe von Methylhydrochinonen und t-Butylhydrochinonen.

**3.** Zusammensetzung gemäß Anspruch 1 oder Anspruch 2, wobei der Katalysator für den thermischen Radikalinitiator ein Übergangsmetallkatalysator ist.

**4.** Zusammensetzung gemäß Anspruch 3, wobei der Übergangsmetallkatalysator ausgewählt ist aus der Gruppe von Salz oder Komplexen von Cu, Mn, Fe und Gemischen davon.

**5.** Zusammensetzung gemäß einem der Ansprüche 1-4, wobei der thermische Radikalinitiator ein Peroxid ist, ausgewählt aus der Gruppe von Peroxyestern, Monoperoxycarbonaten und Gemischen davon.

**6.** Zusammensetzung gemäß einem der Ansprüche 1-5, wobei das Harz reaktionsfähige Nichtsättigungen auf der Grundlage von Maleinsäure und/oder Fumarsäure enthält.

**7.** Zusammensetzung gemäß einem der Ansprüche 1-6, wobei das Harz ein Polyester ist.

**8.** Zusammensetzung gemäß einem der Ansprüche 1-7, wobei der Co-Vernetzer ausgewählt ist aus der Gruppe von Allylen, Acrylaten, Methacrylaten, Vinylestern, Vinylethern, Vinylamiden, Alkinethern, Alkinestern, Alkinamiden, Alkinaminen, Propargylethern, Propargylestern, Itaconaten, Enaminen, Thiolen und Gemischen davon.

**9.** Zusammensetzung gemäß einem der Ansprüche 1-8, wobei der Co-Vernetzer ausgewählt ist aus der Gruppe von Vinylethern, Vinylestern und Gemischen davon.

10. Zusammensetzung gemäß einem der Ansprüche 1-9, wobei das Harz, das die reaktionsfähigen Nichtsättigungen enthält, und der optionale Co-Vernetzer sowohl in Pulver (A) als auch in Pulver (B) vorhanden sind.

11. Zusammensetzung gemäß einem der Ansprüche 1-10, wobei der Hydrochinon-Hemmer sowohl in Pulver (A) als auch in Pulver (B) vorhanden ist.

12. Verfahren zum Herstellen einer Zweikomponenten-Pulverbeschichtungszusammensetzung gemäß einem der Ansprüche 1-11, umfassend die Schritte:

(a) Bilden von Pulver (A),
(b) Bilden von Pulver (B),
(c) physisches Mischen von Pulver (A) und Pulver (B), um die Zweikomponenten-Pulverbeschichtungszusammensetzung zu bilden.

13. Verfahren zum Beschichten eines Substrats, umfassend folgende Schritte:

1) Aufbringen einer Pulverbeschichtungszusammensetzung gemäß einem der Ansprüche 1-11 auf ein Substrat, um ein beschichtetes Substrat zu erhalten.
2) Erhitzen des beschichteten Substrats.

14. Substrat, das vollständig oder teilweise mit einer Pulverbeschichtungszusammensetzung gemäß einem der Ansprüche 1-11 beschichtet ist.

15. Verwendung einer Pulverbeschichtungszusammensetzung gemäß einem der Ansprüche 1-11 zum Beschichten eines wärmeempfindlichen Substrats.

16. Verwendung einer Pulverbeschichtungszusammensetzung gemäß Anspruch 15, wobei das wärmeempfindliche Substrat Holz ist.

## Revendications

1. Composition de revêtement en poudre thermodurcissable comprenant un mélange d'une poudre (A) et d'une poudre (B),
dans laquelle la poudre (A) comprend

- un initiateur thermique de radicaux,

dans laquelle la poudre (B) comprend

- un catalyseur pour l'initiateur thermique de radicaux,

dans laquelle la poudre (A) ne comprend pas de catalyseur pour l'initiateur thermique de radicaux et dans laquelle la poudre (B) ne comprend pas d'initiateur thermique de radicaux,
dans laquelle une résine contenant des insaturations réactives est présente dans la poudre (A) et/ou la poudre (B),
dans laquelle un inhibiteur à base d'hydroquinone est présent dans la poudre (A) et/ou la poudre (B),
dans laquelle, dans le cas où les insaturations réactives dans la résine ne sont pas susceptibles de réagir les unes avec les autres après initiation thermique de radicaux, un co-agent de réticulation, lequel co-agent de réticulation a la capacité de réagir avec les insaturations réactives dans la résine après initiation de radicaux, est présent dans la poudre (A) et/ou la poudre (B).

2. Composition selon la revendication 1, dans laquelle l'inhibiteur à base d'hydroquinone est choisi dans le groupe des méthylhydroquinones et t-butylhydroquinones.

3. Composition selon la revendication 1 ou la revendication 2, dans laquelle le catalyseur pour l'initiateur thermique de radicaux est un catalyseur à métal de transition.

4. Composition selon la revendication 3, dans laquelle le catalyseur à métal de transition est choisi dans le groupe

des sels ou complexes de Cu, Mn, Fe et des mélanges de ceux-ci.

**5.** Composition selon l'une quelconque des revendications 1 à 4, dans laquelle l'initiateur thermique de radicaux est un peroxyde choisi dans le groupe des peroxyesters, des monoperoxycarbonates et des mélanges de ceux-ci.

**6.** Composition selon l'une quelconque des revendications 1 à 5, dans laquelle la résine contient des insaturations réactives basées sur l'acide maléique et/ou sur l'acide fumarique.

**7.** Composition selon l'une quelconque des revendications 1 à 6, dans laquelle la résine est un polyester.

**8.** Composition selon l'une quelconque des revendications 1 à 7, dans laquelle le co-agent de réticulation est choisi dans le groupe constitué par les allyles, les acrylates, les méthacrylates, les esters vinyliques, les éthers vinyliques, les vinylamides, les éthers d'alcyne, les esters d'alcyne, les alcynamides, les alcynamines, les éthers propargyliques, les esters propargyliques, les itaconates, les énamines, les thiols et les mélanges de ceux-ci.

**9.** Composition selon l'une quelconque des revendications 1 à 8, dans laquelle le co-agent de réticulation est choisi dans le groupe des éthers vinyliques, des esters vinyliques et des mélanges de ceux-ci.

**10.** Composition selon l'une quelconque des revendications 1 à 9, dans laquelle la résine contenant les insaturations réactives et le co-agent de réticulation facultatif sont présents à la fois dans la poudre (A) et dans la poudre (B).

**11.** Composition selon l'une quelconque des revendications 1 à 10, dans laquelle l'inhibiteur à base d'hydroquinone est présent à la fois dans la poudre (A) et dans la poudre (B).

**12.** Procédé de préparation d'une composition de revêtement en poudre bicomposant selon l'une quelconque des revendications 1 à 11 comprenant les étapes consistant à :

(a) former la poudre (A),
(b) former la poudre (B),
(c) mélanger physiquement la poudre (A) et la poudre (B) pour former la composition de revêtement en poudre bicomposant.

**13.** Procédé de revêtement d'un substrat comprenant les étapes suivantes :

1) appliquer une composition de revêtement en poudre selon l'une quelconque des revendications 1 à 11 à un substrat pour obtenir un substrat revêtu,
2) chauffer le substrat revêtu.

**14.** Substrat qui est entièrement ou partiellement recouvert d'une composition de revêtement en poudre selon l'une quelconque des revendications 1 à 11.

**15.** Utilisation d'une composition de revêtement en poudre selon l'une quelconque des revendications 1 à 11 pour recouvrir un substrat sensible à la chaleur.

**16.** Utilisation d'une composition de revêtement en poudre selon la revendication 15 dans laquelle le substrat sensible à la chaleur est le bois.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0957141 A1
- WO 2010052296 A
- US 20020091214 A1


### Non-patent literature cited in the description


- **G. MAGGIORE.** Overview of the powder coatings market worldwide. *Pitture e Vernice Europe,* January 1992, 15-22
- **D. RICHART.** Powder Coating: Current Developments, Future Trends. *Waterborne, High-Solids and Powder Coatings Symposium,* 22 February 1995
- *Journal of Applied Polymer Science,* 1979, vol. 23, 25-38
- **MISEV.** Powder Coatings, Chemistry and Technology. John Wiley, 1991, 224-300